# EUROPEAN PATENT APPLICATION

(11) **EP 1 520 875 A2**
(43) Date of publication of application: **06.04.2005**
(21) Application number: 04255696.9
(22) Date of filing: 18.09.2004
(51) Int. Cl.: C08K 5/00, C08K 5/372

(54) **Thermal stabilizer composition for halogen containing vinyl polymers**

(30) Priority: 03.10.2003 US 508762
(71) Applicant: Rohm and Haas Company, Philadelphia, Pennsylvania 19106-2399 (US)
(72) Inventor: Norris, Gene Kelly, West Chester, Ohio 45069 (US)
(74) Representative: Buckley, Guy Julian

(57) **Abstract**

Stabilizer compositions are used to stabilize halogen-containing vinyl polymers from, for example, degradation and discoloration. The stabilizer compositions comprise a zinc mercaptide and a latent mercaptan.

## Description

### BACKGROUND

This invention relates to stabilizer compositions for halogen-containing vinyl polymers, the stabilized halogen-containing vinyl polymer compositions, and articles formed therefrom, and methods for stabilizing halogen-containing vinyl polymers.

Halogen-containing vinyl polymers, for example, poly(vinyl chloride) (PVC), copolymers of vinyl chloride and vinyl acetate, and poly(vinylidine chloride), are commonly used for fabricating a variety of articles such as pipes, window casings, siding, bottles, wall covering and packaging film. There have been many attempts to add stabilizers to halogen-containing vinyl polymers to ameliorate the color changes that can occur in the polymer resins, particularly those color changes that occur during the first one to ten minutes of processing and/or those that occur over prolonged use. Latent or blocked mercaptans have been found to be particularly effective for minimizing discoloration early in processing, as well as for providing long-term color stability, i.e., when the polymer is exposed to ultraviolet light and weathering. An advantage of the latent mercaptans is that release of the free mercaptan during processing can augment the effects of other stabilizers (i.e., such as organic or metallic stabilizers). An example of such combination is disclosed in U.S. Patent No. 4,973,619, in which a blocked mercaptan is combined with a fatty acid salt of cadmium or zinc. While this combination is suitable for its intended purpose, there remains a need for other stabilizer combinations for halogen-containing vinyl polymers.

The problem addressed by the invention is therefore the provision of stabilizer compositions for halogen-containing vinyl polymers, particularly stabilizer compositions that are more effective in protecting halogen-containing vinyl polymers from degradation and discoloration during processing or long-term use.

### STATEMENT OF THE INVENTION

In a first aspect, there is provided a stabilizer composition comprising a zinc mercaptide and a latent mercaptan, wherein
the zinc mercaptide is a zinc mercaptoester of Formula 1:

Zn[S(CH₂)ₓC(=O)OR]₂ (1)

wherein each R is independently a hydrocarbyl group, and x is 1 or 2, a zinc mercaptoester of Formula 2:

Zn[S(CHR')ₐ(CH₂)_{b}C(=O)OR"]₂ (2)

wherein a = 0 or 1, b = 1 or 2, each R' is independently methyl or -C(=O)OR", and each R" is independently -[(CH₂{C(R^{*})(R^{2*})}_{y}CH₂O)_{z}R^{3*}] where each R^{*} is independently -H, C₁₋₁₈ alkyl or C₁₋₁₈ hydroxy-substituted alkyl, each R^{2*} is -OH, C₁-₁₈ hydroxy-substituted alkyl, or -OC(=O)R^{4*} , each R^{3*} is -H or C₁₋₁₈ alkyl, each R^{4*} is alkyl or alkenyl, y = 0 or 1, and z = 1-4, with the proviso that when z is greater than 1, y=0, a zinc mercaptoalkyl carboxylic acid ester of Formula 3:

Zn[SCH₂(CH₂)_{q}OC(=O)R^{5*}]₂, (3)

wherein R^{5*} is a C₁₋₁₈ alkyl, C₁₋₁₈ alkenyl, or C₆₋₁₂ aryl group, and q = 1-6, or a mixture comprising one or more of the foregoing zinc mercaptides; and wherein
the latent mercaptan has the formula (4): 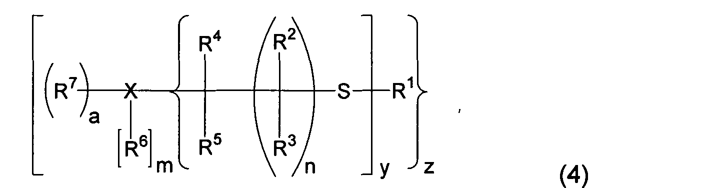 wherein a = 0 or 1, m = 0 or 1, n = 0 or 1, and y = 1-4 with the proviso that when y = 1, z = 1-4 and when y is greater than 1, z = 1; R¹ is a monovalent, divalent, trivalent, or tetravalent C₁₋₄₀₀ alkyl, alkenyl, cycloalkyl, cycloalkenyl, aryl, alkaryl, aralkyl, alkenylaryl, aralkenyl, hydroxyalkyl, dihydroxyalkyl, hydroxy(polyalkoxy)alkyl, alkoxyalkyl, hydroxyalkoxyalkyl, alkoxy(hydroxyalkyl), alkoxy(acyloxyalkyl), alkoxy(polyalkoxy)alkyl, alkoxy(polyalkoxy)carbonylalkyl, carboxyalkyl, acyloxyalkyl, acyloxy(hydroxyalkyl), acyloxyalkoxyalkyl, acyloxy(polyalkoxy)alkyl, benzoyloxy(polyalkoxy)alkyl, alkylenebis-(acyloxyalkyl), alkoxycarbonylalkyl, alkoxycarbonylalkylenyl, hydroxyalkoxycarbonylalkyl, hydroxy(polyalkoxy)carbonylalkyl, mercaptoalkyl, mercaptoalkenyl, mercaptoalkoxycarbonylalkyl, mercaptoalkoxycarbonylalkenyl, alkoxycarbonyl(amido)alkyl, alkylcarbonyloxy(polyalkoxy)carbonylalkyl, tetrahydopyranyloxy(polyalkoxy)carbonylalkyl, tetrahydropyranyloxyalkyl, hydroxyaryl, mercaptoaryl or carboxyaryl group; R², R³, R⁴, R⁵, R⁶, and R⁷ are each independently a -H, -OH, -SH, acyl, C₁₋₅₂ alkyl, alkenyl, aryl, haloaryl, alkaryl, aralkyl, hydroxyalkyl, mercaptoalkyl, hydroxyaryl, alkoxyaryl, alkoxyhydroxyaryl, or mercaptoaryl group; X is aryl, haloaryl, alkaryl, aralkaryl, hydroxyaryl, dihydroxyaryl, cycloalkyl aryl, arylcycloalkyl, or a heteroatom, R⁶ and R⁷may form a heterocyclic moiety in conjunction with X as nitrogen when a is 1 and m is 1, one of R¹, R³, and R⁵ may join with R⁷ and X to form a heterocyclic moiety with X as a heteroatom selected from the group consisting of oxygen and sulfur when a = 1 and m = 0; with the proviso that when X is aralkaryl, z is 1 or 2, R⁶ and R⁷ are -OH, a = 1, and m = 1, and with the further proviso that when R⁶ is -OH or -SH, z = 1.

In a second aspect, there is provided a stabilized polymeric composition comprising a halogen-containing vinyl polymer and the above-described zinc mercaptide and latent mercaptan and/or degradation products of the latent mercaptan.

In a third aspect, there is provided a method of stabilizing a halogen-containing vinyl polymer comprising adding the above-described stabilizer composition to the polymer.

In a fourth aspect, there is provided an article comprising the above-described stabilized polymeric composition.

The disclosed stabilizer compositions surprisingly show improved stabilization over that observed for the prior art combination of latent mercaptan and zinc salt of a fatty acid. The stabilizer compositions exhibit particularly good early color, i.e., prolonged whiteness during early processing.

### DETAILED DESCRIPTION

As used herein, a hydrocarbyl group is a group that is inclusive of saturated or unsaturated hydrocarbons, i.e., alkyl, cycloalkyl, alkenyl, cycloalkenyl, aryl, aralkyl, aralkaryl, aracycloalkyl, aralkenyl, alkaryl, cycloalkaryl, and alkenylaryl groups, as well as mixtures of the foregoing groups. The term is specifically contemplated to include mixtures of hydrocarbons derived from natural sources, for example tall oil, and the like. Further, alkyl groups and the alkyl portion of the foregoing groups may be linear or branched unless otherwise indicated. The term oxyalkylenyl means a divalent group of a polyalkylene ether molecule. The prefix "halo" indicates the presence of one more fluorine, chlorine, bromine, and/or iodine groups. Also as used herein, an acyloxyalkyl group originates from a carboxylic acid ester of an alcohol, thus has the formula -ROC(=O)R (e.g., the stearic acid ester of mercaptopropanol has a stearoyloxypropyl group); while an alkoxycarbonylalkyl group has the formula -RC(=O)OR (e.g., lauryl 3-mercaptopropionate has a dodecyloxycarbonylethyl group). The abbreviation "phr" refers to parts by weight of a particular component per 100 parts by weight of the halogen-containing vinyl polymer.

A number of suitable zinc mercaptides for use in the inventive stabilizer compositions are known, and include, for example, zinc mercaptoesters and zinc mercaptoalkyl carboxylic acid esters. An exemplary zinc mercaptoester is of Formula 1:

Zn[S(CH₂)ₓC(=O)OR]₂ (1)

wherein each R is independently a hydrocarbyl group, and x is 1 or 2. Suitable zinc mercaptoesters of Formula 1 include, for example, zinc bis(2-ethylhexyl thioglycolate), zinc bis(octyl mercaptopropionate), zinc bis(octadecyl thioglycolate), zinc bis(octadecyl mercaptopropionate), zinc bis(ethyl thioglycolate), and mixtures comprising one or more of the foregoing zinc mercaptoesters.

Another suitable zinc mercaptoester is of Formula 2:

Zn[S(CHR')ₐ(CH₂)_{b}{C(=O)O}R"]₂ (2)

wherein a = 0 or 1, b = 1 or 2, each R' is independently methyl or -C(=O)OR", and each R" is independently -[(CH₂{C(R^{*})(R^{2*})}_{y}CH₂O)_{z}R^{3*}] where each R^{*} is independently -H, C₁₋₁₈ alkyl or C₁₋₁₈ hydroxy-substituted alkyl, each R^{2*} is -OH, C₁₋₁₈ hydroxy-substituted alkyl, or -OC(=O)R⁴ , each R^{3*} is -H, C₁₋₁₈ alkyl, -C(O)R^{4*}, each R^{4*} is a hydrocarbyl group, preferably a C₁₋₃₆ alkyl or alkenyl group, y = 0 or 1, and z = 1-4, with the proviso that when z is greater than 1, y=0.

Suitable zinc mercaptoesters of Formula 2 include, for example, the zinc bis(thioglycolate), zinc bis(mercaptopropionate), or zinc mercaptosuccinate of a polyhydric alcohol or an ether, carboxylate, or ether-carboxylate having at least one hydroxy-functional group as exemplified by ethylene glycol, glycerol, tetraethylene glycol, trimethylolethane, pentaerythritol, glycol ethers such as tetraethylene glycol monobutyl ether, and diethylene glycol monoethyl ether, glycol monocarboxylates such as diethylene glycol monocaprate and ethylene glycol monocaprate, glycerol carboxylates such as glycerol monocaprate, and mixtures comprising one or more of the foregoing zinc mercaptoesters.

Another suitable zinc mercaptoalkyl carboxylic ester is of Formula 3:

Zn[SCH₂(CH₂)_{q}OC(=O)R^{5*}]₂ (3)

wherein R^{5*} is a C₁₋₁₈ alkyl, C₁₋₁₈ alkenyl, or C₆₋₁₂ aryl group, and q = 1-6. Mixtures comprising one or more of the foregoing zinc mercaptides of Formula 1 and/or Formula 2 and/or Formula 3 may also be used. Preferably, q = 1 or 2 and R^{5*} is a C₇₋₁₇ alkyl group or a phenyl group.

The zinc mercaptoalkyl carboxylic esters of Formula 3 are "reverse esters", so called because they are the products of the reaction of mercaptoalkyl alcohols and carboxylic acids, instead of mercaptoacids and alcohols. Suitable reverse esters include, for example, zinc bis(2-mercaptoethyl stearate), zinc (2-mercaptoethyl caproate), zinc bis(2-mercaptoethyl tallate), zinc bis(2-mercaptocaprylate), and mixtures comprising one or more of the foregoing reverses esters. Mixtures comprising one or more of the foregoing zinc mercaptides of Formula 1 and/or Formula 2 and/or Formula 3 may also be used.

The zinc mercaptides of Formulas 1, 2 and 3 may be prepared by reaction of the corresponding mercaptoester or mercaptoalkyl carboxylic ester with zinc chloride in the presence of a suitable hydrogen chloride scavenger such as, for example, ammonia, ammonium hydroxide, or an alkali metal hydroxide or a carbonate thereof. Alternatively, condensation of the corresponding mercaptoester or mercaptoalkyl carboxylic ester with zinc oxide may be carried out at 100-140°C under reduced pressure to remove water, or in an organic medium such as, for example, high boiling point naphtha, xylene, and paraffin wax. The ratio of zinc compound and mercapto compound is that sufficient to drive the reaction, preferably a stoichiometric ratio. Atmospheric pressure is often suitable, but the reaction will proceed satisfactorily at 50 to 80°C at reduced pressure. The maximum reaction temperature is typically 140 to 150°C.

Some of mercaptoesters and/or mercaptoalkyl carboxylic esters are commercially available or may be made by procedures wherein the mercaptoacid and a hydroxyl-group bearing compound are heated in the presence of a suitable catalyst such as methanesulfonic acid or p-toluene sulfonic acid and an azeotropic organic solvent such as toluene or heptane. Alternatively, the esterification reaction may be conducted without solvent at reduced pressure. The reaction is continued until the acid number is reduced to about 15 or less.

A preferred zinc mercaptide is zinc bis(2-ethylhexyl thioglycolate), zinc bis(2-ethylhexyl β-mercaptopropionate), or a mixture comprising one or more of the foregoing zinc mercaptides. The amount of zinc added as zinc mercaptide will vary depending on the application, and is readily determined by one of ordinary skill in the art, depending on the halogen-containing vinyl polymer formulation, processing method, intended use, and like considerations. In general, a suitable amount of zinc is 0.05 phr to 1.5 phr. Within this range, an amount of greater than or equal to 0.01 phr can be used, preferably greater than or equal to 0.05 phr, and more preferably greater than or equal to 0.1 phr. Also within this range, less than or equal to 1.5 phr can be used, preferably less than or equal to 1.25 phr, and more preferably less than or equal to 1.0 phr. Greater than 1.5 phr leads no appreciably enhanced effects and/or to the sudden degradation phenomenon known as zinc burn, while less than 0.005 does not provide the desired level of stabilization.

The terms "blocked mercaptan" and "latent mercaptan" are used interchangeably herein to mean a thioether that degrades to liberate a free mercaptan. The particular substituents of the latent mercaptan are selected so as to provide stability at lower temperatures, e.g., room temperature, but to degrade at the higher temperatures used to process halogen-containing vinyl polymers. The blocking group effectively masks the offensive odor of the mercaptan. The latent mercaptan is of Formula (4): 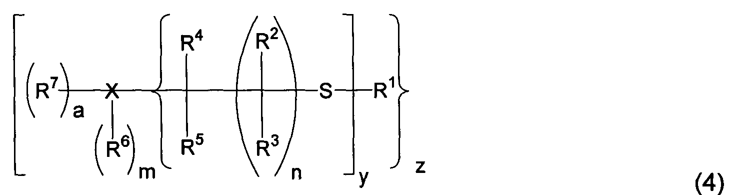 wherein a = 0 or 1, m = 0 or 1, n = 0 or 1, and y = 1-4 with the proviso that when y = 1, z = 1-4 and when y is greater than 1, z = 1.

R¹ in Formula 4 is a monovalent, divalent, trivalent, or tetravalent C₁₋₅₂ alkyl, alkenyl, cycloalkyl, cycloalkenyl, aryl, alkaryl, aralkyl, aralkenyl, hydroxyalkyl, dihydroxyalkyl, hydroxy(polyalkoxy)alkyl, alkoxyalkyl, hydroxyalkoxyalkyl, alkoxy(hydroxyalkyl), alkoxy(acyloxyalkyl), alkoxy(polyalkoxy)alkyl, alkoxy(polyalkoxy)carbonylalkyl, carboxyalkyl, acyloxyalkyl, acyloxy(hydroxyalkyl), acyloxyalkoxyalkyl, acyloxy(polyalkoxy)alkyl, benzoyloxy(polyalkoxy)alkyl, alkylenebis-(acyloxyalkyl), alkoxycarbonylalkyl, alkoxycarbonylalkylenyl, hydroxyalkoxycarbonylalkyl, hydroxy(polyalkoxy)carbonylalkyl, mercaptoalkyl, mercaptoalkenyl, mercaptoalkoxycarbonylalkyl, mercaptoalkoxycarbonylalkenyl, alkoxycarbonyl(amido)alkyl, alkylcarbonyloxy(polyalkoxy)carbonylalkyl, tetrahydopyranyloxy(polyalkoxy)carbonylalkyl, tetrahydropyranyloxyalkyl, hydroxyaryl, mercaptoaryl or carboxyaryl group.

R², R³, R⁴, R⁵, R⁶, and R⁷ are each independently a -H, -OH, -SH, acetyl, monovalent or divalent C₁₋₃₆ alkyl, alkenyl, aryl, haloaryl, alkaryl, aralkyl, hydroxyalkyl, mercaptoalkyl, hydroxyaryl, alkoxyaryl, alkoxyhydroxyaryl, or mercaptoaryl group.

X in Formula 4 is a monovalent, divalent, trivalent, or greater aryl, haloaryl, alkaryl, aralkaryl, hydroxyaryl, dihydroxyaryl, cycloalkyl aryl, arylcycloalkyl group, or a heteroatom. In addition, R⁶ and R⁷ may together form a heterocyclic moiety in conjunction with X as nitrogen when a is 1 and m is 1, and one of R¹, R³, and R⁵ may join with R⁷ and X to form a heterocyclic moiety with X as a heteroatom selected from the group consisting of oxygen and sulfur when a = 1 and m = 0. The foregoing is with the proviso that when X is aralkaryl, z is 1 or 2, R⁶ and R⁷ are -OH, a = 1, and m = 1, and with the further proviso that when R⁶ is -OH or -SH, z = 1.

Preferably, the alkyl groups and the alkyl portions of the foregoing groups, e.g., the alkyl portions of the hydroxyalkyl, mercaptoalkyl, alkoxyalkyl groups, and the like of Formula 4 contain from 1 to 20 carbon atoms and may have up to 3 ethylenic double bonds.

Examples of the latent mercaptans include, for example, compounds having the following formulas, as each relates to Formula (4): 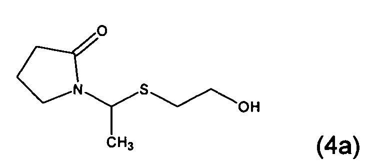 wherein a = 1, m = 1, n = 0; y = 1, z = 1, R¹ is 2-hydroxyethyl, R⁴ is hydrogen, R⁵ is methyl, X is nitrogen and R⁶ and R⁷ together form a heterocyclic moiety in conjunction with X; 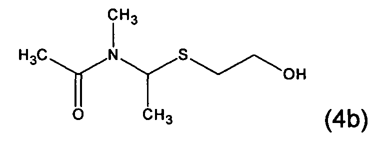 wherein a = 1, m = 1, n = 0; y = 1, z = 1, R¹ is 2-hydroxyethyl R⁴ is hydrogen, R⁵ is methyl, R⁶ is acetyl, and R⁷ is methyl, and X is nitrogen; 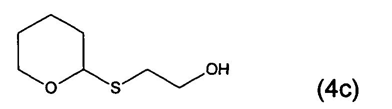 wherein a = 1, m = 0, n = 0; y = 1, z = 1, R¹ is 2-hydroxyethyl, R⁴ is hydrogen, X is oxygen, and R⁵ and R⁷ together form a heterocyclic moiety in conjunction with X; 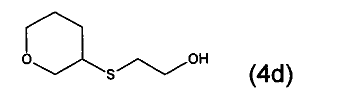 wherein a = 1, m = 0, n = 1, y = 1, z = 1, R¹ is 2-hydroxyethyl, R², R⁴, and R⁵ are hydrogen, X is oxygen, and R³ and R⁷ together form a heterocyclic moiety in conjunction with X; 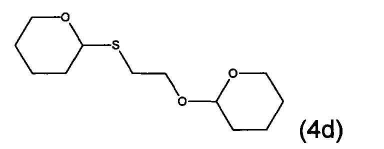 wherein a= 1, m=0, n=0,y= 1,z= 1, R¹ is 2-tetrahydro-pyranyloxyethyl, R⁴ is hydrogen, X is oxygen, and R⁵ and R⁷ together form a heterocyclic moiety in conjunction with X; 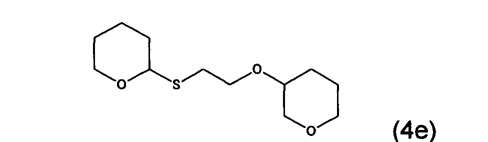 wherein a = 1, m = 0, n = 0, y = 1, z = 1, R¹ is 3-tetrahydro-pyranyloxyethyl, R⁴ is hydrogen, X is oxygen, and R⁵ and R⁷ together form a heterocyclic moiety in conjunction with X; 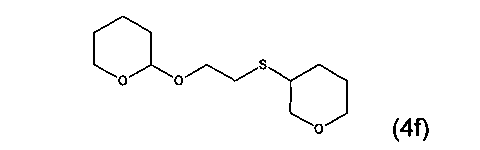 wherein a = 1, m = 0, n = 1, y = 1, z = 1, R¹ is 2-tetrahydro-pyranyloxyethyl, R², R⁴, and R⁵ are hydrogen, X is oxygen, and R³ and R⁷ together form a heterocyclic moiety in conjunction with X; 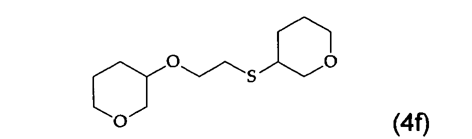 wherein a = 1, m = 0, n = 1, y = 1, z = 1, R¹ is 3-tetrahydro-pyranyloxyethyl, R², R⁴ and R⁵ are hydrogen, X is oxygen, and R³ and R⁷ together form a heterocyclic moiety in conjunction with X; 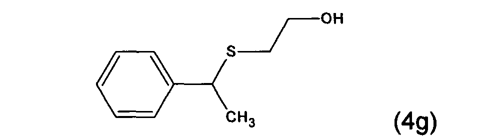 wherein a = 0, m = 0, n = 0, y = 1, z = 1, R¹ is 2-hydroxyethyl, R⁴ is methyl, R⁵ is hydrogen, and X is phenyl; 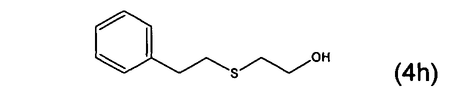 wherein a =0, m = 0, n = 1,y =1, z =1, R¹ is 2-hydroxyethyl, R², R³, R⁴, and R⁵ are hydrogen, and X is phenyl; 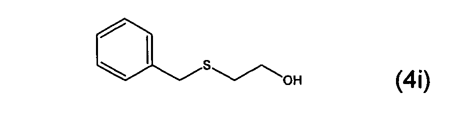 wherein a = 0, m = 0, n = 0, z = 1; y = 1, R₁ is 2-hydroxyethyl, R⁴ and R⁵ are hydrogen, and X is phenyl; 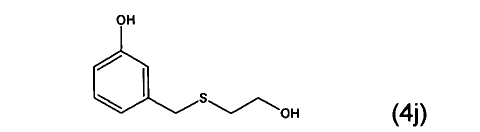 wherein a = 1, m = 0, n = 0, y = 1, z = 1, R¹ is 2-hydroxyethyl, R⁴ and R⁵ are hydrogen, R⁷ is m-hydroxy, and X is phenyl; 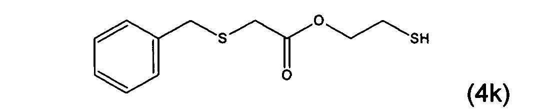 wherein a = 0, m = 0, n = 0, y = 1, z = 1, R¹ is 2-mercaptoethoxycarbonylmethyl, R⁴ and R⁵ are hydrogen, and X is phenyl; 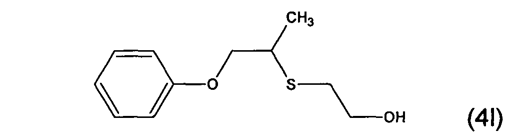 wherein a = 1, m = 0, n = 1, y = 1, z = 1, R¹ is 2-hydroxyethyl, R², R⁴ and R⁵ are hydrogen, R³ is methyl, R⁷ is phenyl, and X is oxygen; 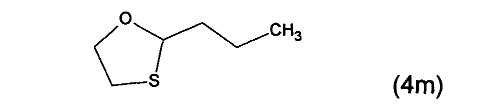 wherein a = 1, m = 0, n = 0, y = 1, z = 1, R⁴ is hydrogen, R⁵ is propyl, X is oxygen, R¹ and R⁷ together form a heterocyclic moiety in conjunction with X; 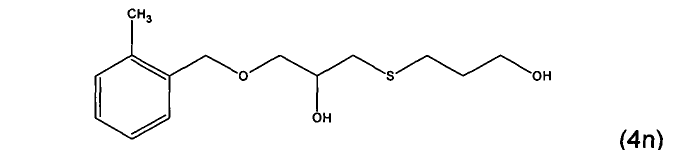 wherein a = 0, m = 1, n = 1, y = 1, z = 1, R¹ is 3-hydroxypropyl, R², R³, R⁴ and R⁶ are hydrogen, R⁵ is 2-(methyleneoxymethylene)tolyl, and X is oxygen; 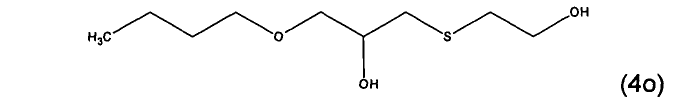 wherein a = 1, m = 0, n = 1, y = 1, z = 1, R¹ is 2-hydroxyethyl, R², R³, R⁴ and R⁷are hydrogen, R₅ is butoxymethylene, and X is oxygen; 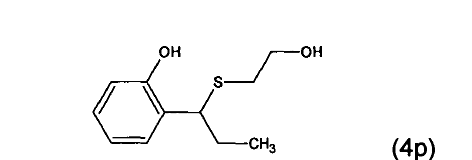 wherein a = 1, m = 0, n = 0, y = 1, z = 1, R¹ is 2-hydroxyethyl, R⁴ is hydrogen, R⁵ is ethyl, R⁷ is *o*-hydroxy, and X is phenyl; 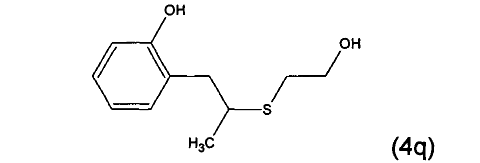 wherein a = 1, m = 0, n = 1, y = 1, z = 1, R¹ is 2-hydroxyethyl, R³, R⁴ and R⁵ are hydrogen, R² is methyl, R⁷ is *o*-hydroxy, and X is phenyl; 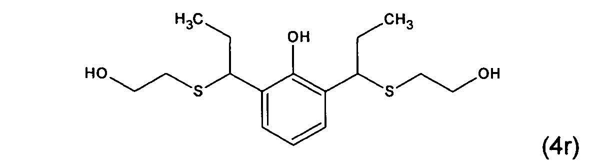 wherein a = 1, m = 0, n = 0, y = 1, z = 2, R¹ is 2-hydroxyethyl, R⁴ is hydrogen, R⁵ is ethyl, R⁷ is hydroxy, and X is phenyl; 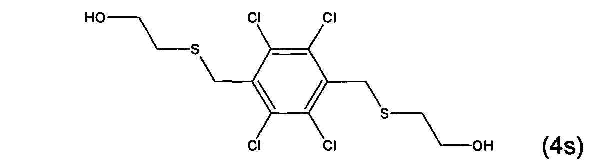 wherein a = 0, m = 0, n = 0, y = 1, z = 2, R¹ is 2-hydroxyethyl, R⁴ and R⁵ are hydrogen, and X is tetrachlorophenyl; 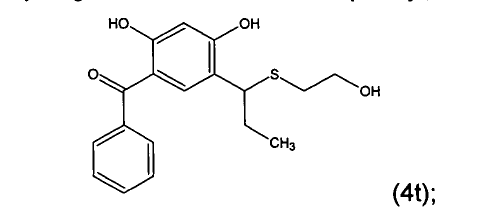 wherein a = 1, m = 0, n = 0, y = 1, z = 1, R¹ is 2-hydroxyethyl, R⁴ is hydrogen, R⁵ is ethyl, R⁷ is m-phenylcarbonyl, and X is o,p-dihydroxyphenyl; 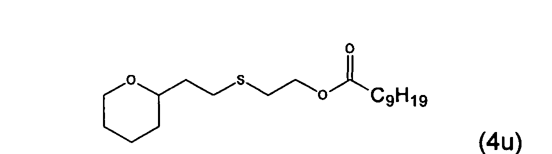 wherein a = 1, m = 0, n = 0; y = 1, z is 1, R¹ is nonoyloxyethyl, R⁴ is hydrogen, X is oxygen, and R⁵ and R⁷ are joined to form a heterocycle with X; and 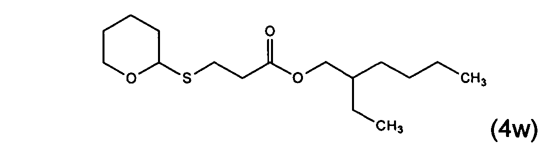 wherein a = 1, m = 0, n = 0, y = 1, z = 1, R¹ is 2-ethylhexyloxycarbonylethyl, R⁴ is hydrogen, X is oxygen, and R⁵ and R⁷ together form a heterocyclic moiety in conjunction with X.

A preferred class of latent mercaptides include, for example, the 2-S-(tetrahydropyranyl)thioglycolic acid esters of C₄₋₁₆ alkyl alcohols such as 2-ethylhexanol, octanol, and dodecanol, and the furanyl homologs thereof.

Latent mercaptans may be formed by reacting a mercaptan-containing organic compound with a blocking group. Suitable mercaptan-containing organic compounds include, for example, alkyl mercaptans, mercapto esters, mercapto alcohols, mercapto acids, and the like. Alkyl mercaptans having from 1 to about 400 carbon atoms and from 1 to 4 mercapto groups are suitable. Mercaptan-containing organic compounds that include R¹ have structures illustrated by the formulas: 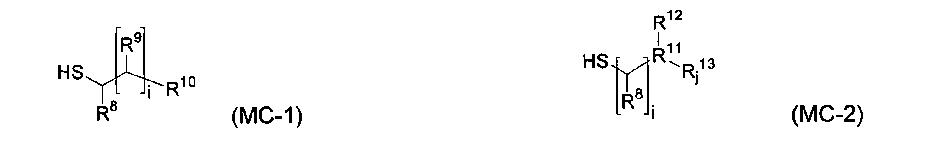 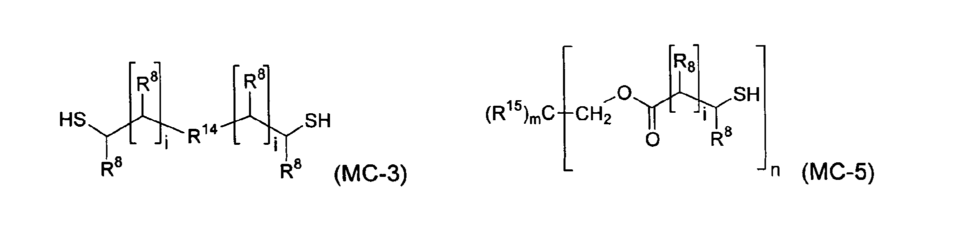 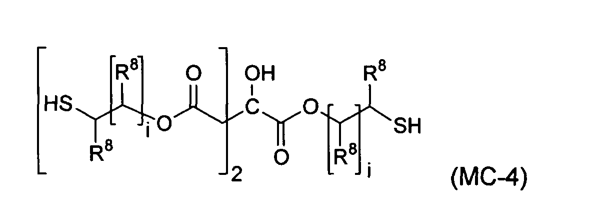 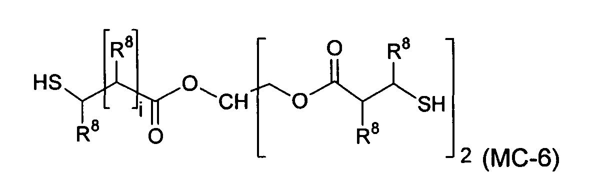 wherein
i=0-6; j=0-3; m=1-2; n=2-3, with the proviso that m + n=4;
R⁸ is -H, C₁₋₁₈ alkyl, or C₁₋₃₆ aryl;
R⁹ and R¹⁰ are each independently -H, -OH, -SH, C₁₋₁₈ alkyl, aryl, R¹⁶C(=O)O-, or R¹⁶OC(=O)-;
R¹¹ is cycloalkyl, cycloalkenyl or phenyl;
R¹² is -H, -OH, -SH, C₁₋₁₈ alkyl, C₆₋₁₈ aryl, R¹⁶C(=O)O-, R¹⁶OC(=O)-, with the proviso that in formula MC2, when R¹¹ is phenyl, R¹² is -OH and i=0, the -SH groups are on non-adjacent carbon atoms;
R¹³ is -H or a divalent group which may contain halogen, hydroxy, mercapto or alkyl substituents and which when R¹¹ is phenyl combines with the phenyl to form a naphthalene ring;
R¹⁴ is divalent, and is -OC(=O)R¹⁷C(=O)O-, -OC(=O)CH=CHC(=O)O-, or -C(=O)OR¹⁷OC(=O)-;
R¹⁵ is C₁₋₁₂ alkyl, preferably -CH₃, -CH₂CH₃; C₁₋₁₂ hydroxyalkyl, preferably hydroxymethyl; or 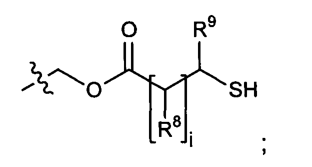
R¹⁶ is -H, C₁₋₂₄ alkyl, C₁₋₂₄ alkenyl, C₆₋₃₆ aryl, C₇₋₃₆ aralkyl, C₇₋₃₆ alkaryl, C₁₋₁₆ cycloalkyl, or C₁₋₃₆ cycloalkenyl; and
R¹⁷ is C₆₋₃₆ arylene, C₁₋₈ alkylenyl, -(CH₂CH₂O)_{b}CH₂CH₂- where b=1-6, or 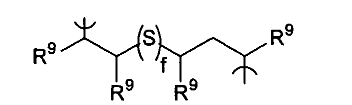
where f=1 or 2.

Preferably, the mercaptan-containing organic compounds are compounds according to formula MC1 where R⁸ is -H; R⁹ is -H; R¹⁰ is -OH, R¹⁶C(=O)O-, or R¹⁶ OC(=O)-; and i=1; compounds according to formula MC2 where R¹¹ is phenyl; R⁸ is -H; R¹² is -H; R¹³ is -H; j=1, and i=1; compounds according to formula MC3 where R⁸ is -H; R¹⁴ is -OC(=O)CH=CHC(=O)O-; and i=1; compounds according to formula MC4 where R⁹ is -H; and i=1; and compounds according to formula MC5 where R¹⁵ is -C₂H₅ or 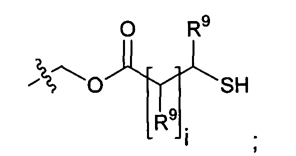 and R⁸ is ―H; and i=1; and compounds according to formula MC6 where R⁸ is -H; and i=1.

Suitable mercaptan-containing organic compounds within the scope of formula MC1 include, for example, the compounds shown in Table 1:

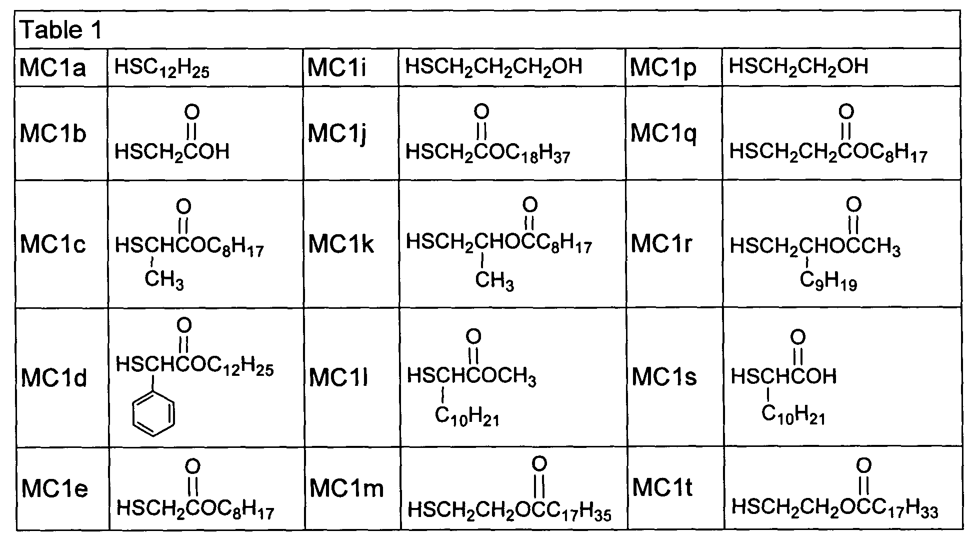

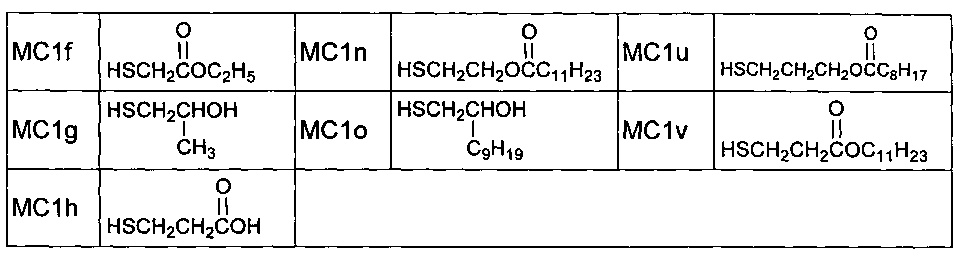

Suitable mercaptan-containing organic compounds within the scope of formula MC2 include, for example, the following compounds:

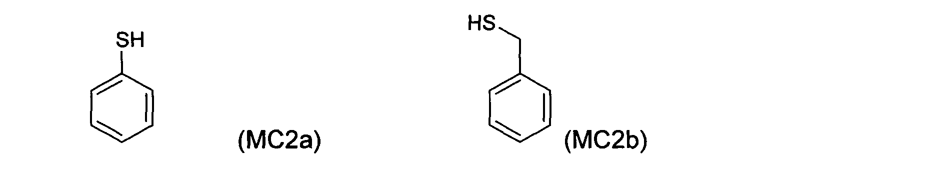

Suitable mercaptan-containing organic compounds within the scope of formula MC3 include, for example, the compounds shown in Table 2:

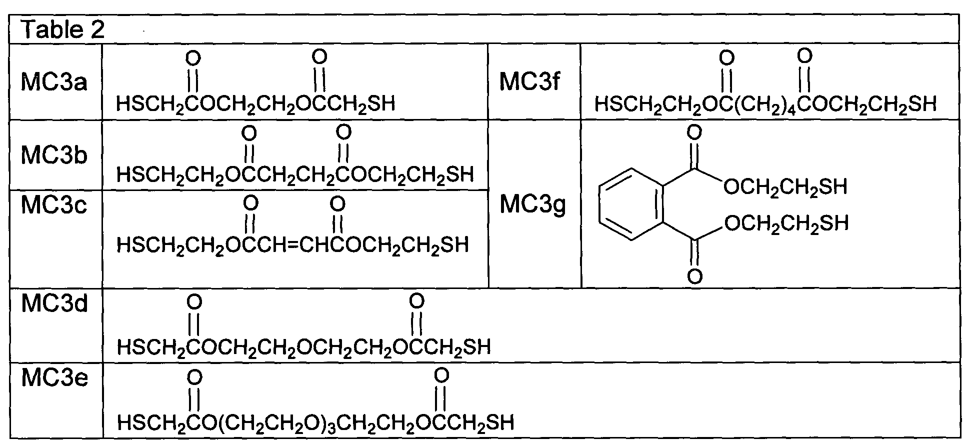

Suitable mercaptan-containing organic compounds within the scope of formula MC4 include, for example, the following compound:

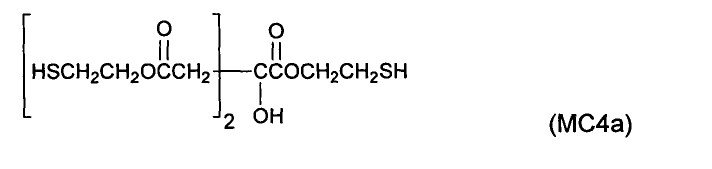

Suitable mercaptan-containing organic compounds within the scope of formula MC5 include, for example, the following compounds:

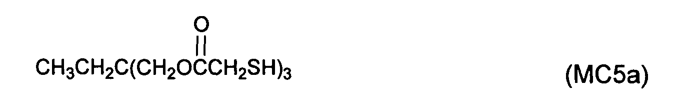

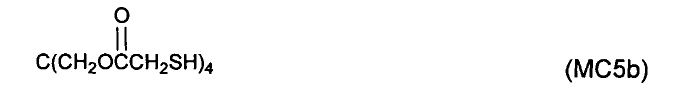

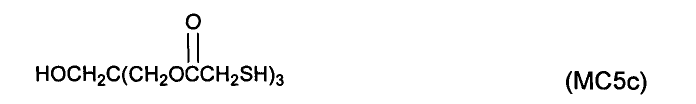

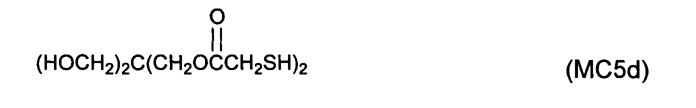

Suitable mercaptan-containing organic compounds within the scope of formula MC6 include, for example, the following compounds:

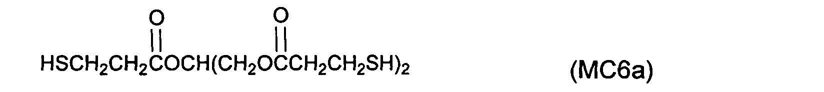

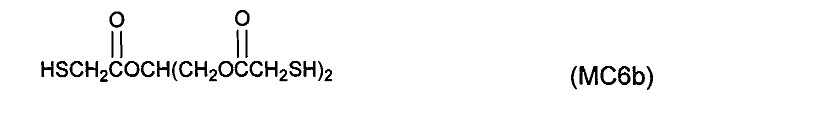

Suitable blocking compounds for the formation of the latent mercaptoester are those compounds that are capable of furnishing a stabilized carbocation having a molecular structure in which several groups share the electron deficiency. For example, polarized, unsaturated compounds exemplified by 3,4-dihydropyran, 2-methoxy-3,4-dihydropyran, styrene, α-methylstyrene, vinyl benzyl chloride, indene, 2-vinylpyridine, N-vinylpyrrolidone, vinyl acetate, octadecyl vinyl ether, cyclohexyl divinyl ether, 2 ethylhexyl vinyl ether, ethylene glycol divinyl ether, ethyleneglycol monovinyl ether, allyl phenyl ether, trans-cinnamaldehyde, N-methyl-N-vinylacetamide, N-vinylcaprolactam, isoeugenol, and 2-propenylphenol. Other suitable compounds include, for example, 3,4-dihydro-2-methoxy-2H-pyran; 3,4-dihydro-2-ethoxy-2H-pyran; 3,4-dihydro-2-phenoxy-2H-pyran; 3,4-dihydro-2-formyl-2H-pyran; and 2,3-dihydrofuran. The 3,4-dihydro-2-formyl-2H-pyran is made by the Diels-Alder dimerization of acrolein at high temperatures and pressures. The 3,4-dihydro-2-alkoxy-2H-pyrans and 3,4-dihydro-2-phenoxy-2H-pyran are made by the reaction of the corresponding vinyl ether with acrolein in the presence of a catalytic amount of a zinc salt, e.g., zinc chloride. A variety of 3,4-dihydro-2H-pyrans having a substituent in the 2-position can be made by similar reactions. The products formed by the reaction of 1 and 2 moles of acrolein with the divinyl ether of an alkylene- or polyalkylene glycol are blocking agents, also. The latent mercaptans made from the di-(3,4-dihydropyranyl) ethers also have the potential of being chelating agents in the polymer compositions. Compounds having labile halogen atoms which split off as hydrogen chloride in a condensation reaction with the mercaptan, as exemplified by triphenylmethyl chloride, benzyl chloride, and bis(chloromethyl)benzene, are also suitable. The mercaptan may also be blocked by condensation with an aldehyde such as butyraldehyde or with a benzyl alcohol such as benzene dimethanol. The preferred blocking agents include 3,4-dihydropyran (DHP).

One suitable procedure for producing latent mercaptans comprises adding the mercapto group of the free mercaptan across the double bonds of polarized, unsaturated compounds ("Procedure A"). For example, the blocking compound, either neat or in solution, is added dropwise to a stirred mixture, under nitrogen atmosphere, of the mercaptan, acid catalyst, and optionally, a small percentage of antioxidant to inhibit group reactions, while maintaining the temperature at 10 to 70°C. Upon heating for 1 to 6 hours at 35 to 70°C, conversion to product may be monitored by gas chromatography and iodine titration for the SH group. The acid catalyst is removed (e.g., by an alkaline wash, or filtration if the catalyst is solid). The resulting product is dried (e.g., with magnesium sulfate), filtered, and any solvent removed under reduced pressure at less than 50°C. A solid phase catalyst may be used and then filtered out of the reaction mixture and regenerated for use in a subsequent synthesis. This method is suitable for production of N-2-hydroxyethylthioethyl-caprolactam from mercaptoethanol and N-vinylcaprolactam; the production of 2-S-(tetrahydropyranyl)thioethyldecanoate from mercaptoethyldecanoate (mercaptoethylcaproate) and 3,4-dihydropyran; 2H-dihydroindenylthio-ethanol from indene andmercaptoethanol; and bis(hydroxyethyl-thioethyl) cyclohexyl ether from mercaptoethanol and cyclohexyl di-vinyl ether. In like manner, the corresponding caprate, oleate, and tallate esters from the corresponding cyclohexyl ethers may be produced.

Alternatively, the condensation of a free mercaptan with a labile halogen-containing compound may be used. For example, a solution of sodium methoxide in methanol is added dropwise to a stirred mixture of the mercaptan and the halogen-containing compound under nitrogen atmosphere while maintaining the temperature below 50°C. Optionally, the reaction is allowed to proceed without the addition of a base source and the liberated hydrogen chloride is removed by nitrogen gas sweep and neutralized with the use of an external acid scrubber. Upon heating for 2 to 24 hours at a temperature of 50 to 70°C, conversion to product is monitored and isolated as above.

Suitable latent mercaptans may also be produced by reaction of a free mercaptan with a labile hydroxyl-containing compound. For example, the hydroxy-containing compound, either neat or in solution, is added to a stirred solution of the mercaptan, acid catalyst, and solvent under nitrogen atmosphere while maintaining the temperature below 45° C. Upon heating at 45 to 75°C for 1 to 10 hours, conversion to product is monitored as above, and/or by monitoring the amount of water produced using azeotropic distillation, typically at 60 to 120°C. Isolation may be carried out as described above. This procedure is useful to produce 1-(2-hydroxyphenyl)-1-S-(2-hydroxyethylthio) methane from 2-hydroxybenzyl alcohol and mercaptoethanol.

Reaction of a free mercaptan with a glycidyl ether may be conducted by adding the glycidyl ether (either neat or in solution) to a stirred mixture of the mercaptan and acid catalyst under nitrogen atmosphere at 25 to 60° C. Upon heating to 50 to 75° C for 1 to 6 hours, conversion to product is monitored and product is isolated as described for procedure A. This procedure may be used to produce C₉H₁₉C(=O)OCH₂CH(OH)CH₂SCH₂CH₂OH from mercaptoethanol and glycidyl neodecanoate.

Reaction of a free mercaptan with an aldehyde to produce a latent mercaptan may be conducted by added the aldehyde to a stirred solution of the mercaptan, acid catalyst, and azeotropic solvent under nitrogen atmosphere and heating to reflux, typically 65 to 120°C, for removal of reaction water. Completion of reaction is achieved after the theoretical amount of water has been collected. Alternatively, BF₃-etherate is added dropwise to a stirred solution of mercaptan, aldehyde, and ether under reflux conditions, and upon reflux for 1 to 6 hours, conversion to product is monitored by gas chromatography. Product may be isolated as in Procedure A.

The amount of latent mercaptan will vary depending on the application, and is readily determined by one of ordinary skill in the art, depending on the halogen-containing vinyl polymer formulation, processing method, intended use, and like considerations. In general, a suitable amount of latent mercaptan is 0.05 phr to 4.0 phr. Within this range, greater than or equal to 0.05 phr can be used, preferably greater than or equal to 0.1 phr, and more preferably greater than or equal to 0.2 phr. Also within this range, less than or equal to 4.0 phr can be used, preferably less than or equal to 2.0 phr, and more preferably less than or equal to 1.0 phr. Greater than 4.0 can lead to mitigating effects, while less than 0.05 does not provide the desired level of stabilization.

Optionally, the stabilizer may include other co-stabilizers such as, for example, epoxy compounds, metallic stabilizers, phosphites, nitrogen-containing stabilizers, including hindered tertiary amines, other non-metallic stabilizers, polyols, hydrotalcites, zeolites, dawsonites, and mixtures comprising one or more of the foregoing co-stabilizers.

Suitable epoxy compounds include, for example, epoxidized oils such as soybean oil, lard oil, olive oil, linseed oil, peanut oil, castor oil, corn oil, tung oil, cottonseed oil, and mixtures comprising one or more of the foregoing epoxy compounds. Other suitable epoxy compounds include, for example, epichlorhydrin/bis-phenol A resins, butoxypropylene oxide, glycidyl epoxystearate, epoxidized α-olefins, epoxidized glycidyl soyate, epoxidized butyl toluate, glycidol, vinyl cyclo-hexene dioxide; the glycidyl ethers of resorcinol, hydroquinone, 1,5-dihydroxynaphthalene, glycerine, pentaerythritol, and sorbitol; allyl glycidyl ether, butyl glycidyl ether, cyclohexane oxide, 4-(2,3-epoxyproproxy)acetophenone, mesityl oxide epoxide, 2-ethyl-3-propyl glycidamine, and mixtures comprising one or more of the foregoing epoxy compounds. The epoxy may be present in amounts of up to 30 phr.

Suitable phosphites include, for example, trialkylphosphites such as trioctyl phosphite, tridecyl phosphite, tridodecyl phosphite, tri(tetradecyl) phosphite, tricyclohexyl phosphite, tristearyl phosphite, distearyl-pentaerythritol diphosphite, or trioleyl phosphite; triaryl phosphites such as triphenyl phosphite, tricresyl phosphite, or tris-p-nonylphenyl phosphite; alkyldiaryl phosphites such as phenyldidecyl phosphite or (2,4-di-tert-butylphenyl)didodecyl phosphite; dialkylaryl phosphites; thiophosphites such as trithiohexyl phosphite, trithiooctyl phosphite, trithiolauryl phosphite, or trithiobenzyl phosphite; or mixtures comprising any one or more of the foregoing phosphites. The phosphites can be used in an amount of, for example, 0.01 to 10, advantageously 0.05 to 5, and especially 0.1 to 3 phr.

Metallic stabilizers are metal salts and organometallic salts other than zinc salts, and include, for example, barium, strontium, calcium, tin, magnesium, cobalt, nickel, titanium, antimony, or aluminum oxides, hydroxides, sulfides, sulfates, halides, phosphates, phenates, perchlorates, carboxylates, and carbonates of metals. Preferred metallic stabilizers include calcium hydroxide, magnesium hydroxide, calcium stearate, calcium 2-ethylhexanoate, calcium octanoate, calcium recinoaleate, calcium myristate, calcium palmitate, barium laurate, barium di(nonylphenolate), barium stearate, aluminum stearate, hydrotalcite, and mixtures comprising one or more of the foregoing metal salts. Metallic-based stabilizers can be present in an amount of up to 2 wt%, preferably 0.1 to 1 wt%, based on the total weight of the halogenated polymer.

Preferred organometallic stabilizers include organotin carboxylates and mercaptides. Suitable organometallic stabilizers include, for example, butyltin tris dodecyl mercaptide, dibutytin dilaurate, dibutyltin didodecyl mercaptide, dianhydride tris dibutylstannane diol, dihydrocarbontin salts of carboxy mercaptals, and mixtures comprising one or more of the foregoing organometallic stabilizers. Monosulfides and/or polysulfides of the organotin mercaptides of mercaptoalkyl carboxylates and/or alkyl thioglycolates, and mixtures comprising one or more of the foregoing, are also suitable as organometallic stabilizers.

Suitable nitrogen-containing stabilizers, include, for example, dicyandiamide, hindered amines, melamine, urea, dimethyl hydantoin, guanidine, thiourea, 2-phenylindoles, aminocrontonates, N-alkyl and N-phenyl substituted maleimides, 1,3-dialkyl-6-amino-uracil derivatives, pyrrolodiazine diones, and mixtures comprising one or more of the foregoing nitrogen-based stabilizers. The nitrogen-based stabilizers can be present in an amount of up to 10 phr. Useful sterically hindered amines include, for example, monomeric, oligomeric, or polymeric 2,2,6,6-tetramethylpiperidine compounds. The nitrogen of the piperidine moiety may be substituted by, for example, hydrogen, C₁-C₁₂ alkyl, C₃ -C₈ alkenyl, or C₇-C₁₂ aralkyl. The C-4 carbon of the piperidine moiety may be substituted by, for example, hydrogen or oxygen or nitrogen-containing groups. Suitable 2,2,6,6-tetramethylpiperidine compounds include, for example, 4-hydroxy-2,2,6,6-tetramethylpiperidine, 1-benzyl-4-hydroxy-2,2,6,6-tetramethylpiperidine, 4-stearoyloxy-2,2,6,6-tetramethylpiperidine, 1,2,2,6,6-pentamethylpiperidin-4-yl-beta-(3,5-di-tert-butyl-4-hydroxyphenyl) propionate, di(2,2,6,6-tetramethylpiperidin-4-yl) succinate, 1-acetyl-2,2,6,6-tetramethylpiperidin-4-yl acetate, trimellitic acid tri(2,2,6,6-tetramethylpiperidin-4-yl) ester, and the like. The piperidines can be used in an amount of, for example 0.01 to 1 phr.

Other suitable nonmetallic stabilizers include, for example, dilaurylthiodipropionate, distearyl 3,3'-thiopropionate, dibenzyl-3,3'-thiodipropionate, dicyclohexyl-3,3'-thiodipropionate, dioleyl-3,3'-thiodipropionate, didecyl-3,3'-thiodipropionate, diethyl-3,3'-thiodipropionate, lauryl ester of 3-mercaptopropionic acid, lauryl ester of 3-lauryl mercaptopropionic acid, the phenyl ester of 3-octyl mercaptopropionic acid, and mixtures comprising one or more of the foregoing non-metallic stabilizers. The latter non-metallic stabilizers may be present in an amount of up to 0.75 phr, preferably 0.01 to 0.75 phr.

Suitable polyols include, for example, pentaerythritol, dipentaerythritol, tripentaerythritol, bistrimethylolpropane, trimethylolpropane, inosite, polyvinyl alcohol, sorbitol, mannitol, lactose, tris(hydroxyethyl)isocyanurate, tetramethylolcyclohexanol, tetramethylolcyclopyranol, glycerol, diglycerol, polyglycerol, 1,3,5-tris(2-hydroxyethyl)isocyanurate (THEIC), or mixtures comprising at least one of the foregoing. Preferred polyols include, for example, sorbitol and trimethylolpropane. The polyols can be used in an amount of, for example, 0.01 to 20 phr, advantageously 0.1 phr to 10 phr.

As used herein, the term halogen-containing vinyl polymer means a halogen-containing polymer in which the halogens are attached directly to a carbon atom. The halogen-containing polymers include, for example, chlorinated polyethylene having about 14 to about 75%, e.g. about 27%, chlorine by weight, chlorinated natural and synthetic rubber, rubber hydrochloride, chlorinated polystyrene, chlorinated poly(vinylidine chloride), chlorinated poly(vinyl chloride), poly(vinyl bromide), poly(vinyl fluoride), other vinyl chloride polymers, and mixtures comprising one or more of the foregoing polymers. The vinyl chloride polymers known as polyvinyl chloride (PVC) are made from vinyl chloride monomers alone or a mixture of monomer reactants comprising, preferably, at least about 70% by weight of vinyl chloride, based on the total monomer weight. Suitable co-monomers include, for example, vinyl acetate, vinyl butyrate, vinyl benzoate, vinylidene chloride, trichloroethylene, 1-fluoro-2-chloroethylene, diethyl fumarate, diethyl maleate, methyl acrylate, 2-ethylhexyl acrylate, methyl alpha-chloroacrylate, butyl acrylate, methyl methacrylate, ethyl methacrylate, butyl methacrylate, styrene, vinyl ketones such as vinyl methyl ketone and vinyl phenyl ketone, acrylonitrile, chloroacrylonitrile, allylidene diacetate, chloroallylidene diacetate, and vinyl ethers such as vinyl ethyl ether, vinyl phenyl ether, the vinyl ether prepared by the reaction of one mole of acrolein with one mole of ethylene glycol divinyl ether, and mixtures comprising one or more of the foregoing co-monomers. Suitable halogen-containing vinyl copolymers include, for example, vinyl chloride-vinyl acetate, vinyl chloride-vinyl acetate (87:13), vinyl chloride-vinyl acetate-maleic anhydride (86:13:1), vinyl chloride-vinylidene chloride (95:5); vinyl chloride-diethyl fumarate (95:5), vinyl chloride 2-ethylhexyl acrylate (80:20), and mixtures comprising one or more of the foregoing copolymers.

A rigid halogen-containing vinyl polymer composition is one that does not contain a plasticizer. A semi-rigid halogen-containing vinyl polymer composition contains 1 to 25 parts of a plasticizer per 100 parts by weight of the halogen-containing vinyl polymer. A flexible halogen-containing vinyl polymer composition contains 25 to 100 parts of a plasticizer per 100 parts by weight of the halogen-containing vinyl polymer. Suitable plasticizers include, for example, alkyl esters of polyacids in which there are from 1 to 3 alkyl groups having from 8 to 12 carbon atoms. Suitable alkyl groups of the alkyl ester include, for example, n-octyl, 2-ethylhexyl, decyl, dodecyl, and mixtures comprising one or more of the foregoing alkyl groups. Suitable polyacids for the alkyl ester include, for example, phthalic acid, trimellitic acid, benzoic acid, adipic acid, sebacic acid, glutaric acid, phosphates, and the like. Polymeric plasticizers are also suitable.

Optionally, the halogen-containing polymer compositions may include other conventional additives such as, for example, antioxidants, lubricants, fillers, pigments, impact modifiers, blowing agents, processing aids, dyes, ultraviolet light absorbing agents, densifying agents, biocides, and mixtures comprising one or more of the foregoing additives. Suitable amounts of the foregoing additives are readily determined by one of ordinary skill in the art depending on the desired final properties and end use of the compositions. In general, each additive is present in an amount of 0.01 to 10 phr, preferably 0.1 to 5 phr.

Suitable antioxidants include, for example, phenolic antioxidants such as 2,6-di-t-butyl-p-cresol, butylated hydroxyanisole, 4,4'-thiobis(6-t-butyl-m-cresol), 4,4'-cyclohexylidenediphenol, 2,5-di-t-amyl hydroquinone, 4,4'-butylidene bis(6-t-buytl-m-cresol), hydroquinone monobenzyl ether, 2,2'-methylene-bis(4-methyl-6-t-butyl phenol), p-amino phenol, 4,4'-thiobis(3-methyl-6-t-butyl phenol), bis [0-(1,1,3,3-tetramethyl butyl)phenol] sulfide, 4-dodecyoxy-2-hydroxybenzophenone, n-dodecyl ester of 3-hydroxy-4-(phenyl carbonyl)phenoxyacetic acid, t-butyl phenol, and mixtures comprising one or more of the foregoing antioxidants.

Suitable lubricants include, for example, paraffin waxes, salts of fatty acids, low molecular weight polyethylene (i.e., polyethylene wax), fatty acid amides (i.e., laurimide and stearamide), bis amides (i.e., decamethylene, bisamide), fatty acid esters (e.g., butyl stearate, glyceryl stearate, linseed oil, palm oil, decyloleate, corn oil, cottonseed oil, and the like), and mixtures comprising one or more of the foregoing lubricants. Suitable fillers include, for example, calcined clays, calcium carbonate, talcs, and mixtures comprising one or more of the foregoing fillers. Suitable pigments include, for example, titanium dioxide, carbon black, iron oxide, and mixtures comprising one or more of the foregoing pigments.

In general, the above-described thermal stabilizer compositions are provided as a one-part mixture formulated so as to provide one or more zinc mercaptides and at least one of one or more latent mercaptans. As other optional additives may also be present in the one-part mixture, the particular amount of each component may vary from 0.1 to 99.9% percent by weight, preferably 1.0 to 99.0% by weight based on the total weight of the one-part mixture. Particular amounts effective to result a synergistic improvement in thermal stability are readily determined by one of ordinary skill in the art.

The halogen-containing vinyl polymer compositions may be prepared by blending under low or high shear. Likewise, the thermal stabilizer compositions may be incorporated in the halogen-containing vinyl polymer composition by mixing the components thereof and the polymer in an appropriate mill or mixer or by another method that provides uniform distribution of the stabilizer throughout the polymer. Depending on the compatibility and physical state (i.e., liquid or solid) the components of the blend may require heating to form a uniform stabilized polymer composition having the desired performance characteristics.

The stabilized halogen-containing vinyl polymer composition can be used to form a variety of rigid articles such as, for example, house siding, window profiles, and pipe by using a variety of techniques to shape the articles such as, for example, molding, extrusion, and injection molding.

Stabilizer compositions comprising a zinc mercaptide and a latent mercaptan as described herein act synergistically to protecting halogen-containing vinyl polymers from degradation and discoloration during processing or long-term use. The invention is further illustrated by the following non-limiting examples.

### EXAMPLES

PVC compositions for thermal stability testing were prepared by mixing, under high shear, 100 parts by weight of PVC resin, pigment (0.2 phr), filler (5.0 phr calcium carbonate), mold release agents (0.5-2 phr), co-stabilizer (0.2 phr trishydroxyethyl isocyanate), and lubricants (0.2 to 2.0 phr), together with the stabilizer compositions shown in the Tables. The mixed compositions were then heated in a two-roll mill at 390°F (199°C) and samples were removed at the indicated time intervals and formed into chips. Color change (as reflected by dE) and yellowness (YI) of each chip was measured using a Hunter Labs (L, a, b) colorimeter. Examples 1-4 contain equimolar zinc metal.

**Table 3**

| Component | Example No. | | | |
|---|---|---|---|---|
| | 1* | 2 | 3* | 4 |
| 2-S-tetrahydropyranal thioglycolate ester of 2-ethylhexanol | 0.5 | 0.5 | 0.5 | 0.5 |
| 2-S-tetrahydropyranal thioethyl tallate - | | - | 0.7 | 0.7 |
| Zinc bis(octoate) | 0.15 | - | 0.15 | - |
| Zinc bis(2-ethylhexyl thioglycolate) | - | 0.2 | - | 0.2 |
| DE at minute | 1* | 2 | 3* | 4 |
| 1 | 21.0 | 15.3 | 13.2 | 13.0 |
| 2 | 23.9 | 14.7 | 16.2 | 12.7 |
| 3 | 21.9 | 15.7 | 18.8 | 12.4 |
| 4 | 20.2 | 19.5 | 19.8 | 15.5 |
| 5 | 25.3 | 27.9 | 20.5 | 19.0 |
| 6 | 34.4 | 36.6 | 20.3 | 21.5 |
| 7 | 42.6 | 44.7 | 19.8 | 22.1 |
| 8 | 49.9 | 52.4 | 23.0 | 21.9 |
| 9 | - | - | - | 23.9 |

| YI at minute | 1* | 2 | 3* | 4 |
|---|---|---|---|---|
| 1 | 26.2 | 9.6 | 14.4 | 12.0 |
| 2 | 35.0 | 11.5 | 20.6 | 13.5 |
| 3 | 29.3 | 14.5 | 27.5 | 15.0 |
| 4 | 24.6 | 23.3 | 30.8 | 21.3 |
| 5 | 35.0 | 42.3 | 31.6 | 29.7 |
| 6 | 58.4 | 65.5 | 30.7 | 34.0 |
| 7 | 77.6 | 82.6 | 28.6 | 34.2 |
| 8 | 79.1 | 85.7 | 26.5 | 32.3 |
| 9 | - | - | - | 26.5 |

| | | | | |
|---|---|---|---|---|
| *Comparative example | | | | |

As may be seen from the data set forth in Table 3, use of a combination of a latent mercaptan and a zinc mercaptide (Examples 2 and 4) provide improved early color.

## Claims

1. A stabilizer composition comprising
a zinc mercaptide, wherein the zinc mercaptide is
a zinc mercaptoester of Formula 1:
Zn[S(CH₂)ₓC(=O)OR]₂ (1)
wherein each R is independently a hydrocarbyl group, and x is 1 or 2;
a zinc mercaptoester of Formula 2:
Zn[S(CHR')ₐ(CH₂)_{b}C(=O)OR"]₂ (2)
wherein a = 0 or 1, b = 1 or 2,
each R' is independently methyl or -C(=O)OR", and
each R" is independently -[(CH₂{C(R^{*})(R^{2*})}_{y}CH₂O)_{z}R^{3*}] where each R^{*} is independently -H, C₁₋₁₈ alkyl or C₁₋₁₈ hydroxy-substituted alkyl, each R^{2*} is -OH, C₁₋₁₈ hydroxy-substituted alkyl, or -OC(=O)R^{4*}, each R^{3*} is -H or C₁₋₁₈ alkyl, each R^{4*} is alkyl or alkenyl, y = 0 or 1, and z = 1-4, with the proviso that when z is greater than 1, y=0;
a zinc mercaptoalkyl carboxylic acid ester of Formula 3:
Zn[SCH₂(CH₂)_{q}OC(=O)R^{5*}]₂, (3)
wherein q = 1-6, and
R^{5*} is a C₁₋₁₈ alkyl, C₁₋₁₈ alkenyl, or C₆₋₁₂ aryl group;
or a mixture comprising one or more of the foregoing zinc mercaptides; and
a latent mercaptan of formula (4): 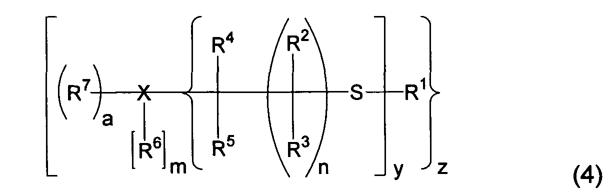 wherein a = 0 or 1, m = 0 or 1, n = 0 or 1, and y = 1-4, with the proviso that when y = 1, z = 1-4 and when y is greater than 1, z = 1;
R¹ is a monovalent, divalent, trivalent, or tetravalent C₁₋₄₀₀ alkyl, alkenyl, cycloalkyl, cycloalkenyl, aryl, alkaryl, aralkyl, alkenylaryl, aralkenyl, hydroxyalkyl, dihydroxyalkyl, hydroxy(polyalkoxy)alkyl, alkoxyalkyl, hydroxyalkoxyalkyl, alkoxy(hydroxyalkyl), alkoxy(acyloxyalkyl), alkoxy(polyalkoxy)alkyl, alkoxy(polyalkoxy)carbonylalkyl, carboxyalkyl, acyloxyalkyl, acyloxy(hydroxyalkyl), acyloxyalkoxyalkyl, acyloxy(polyalkoxy)alkyl, benzoyloxy(polyalkoxy)alkyl, alkylenebis-(acyloxyalkyl), alkoxycarbonylalkyl, alkoxycarbonylalkylenyl, hydroxyalkoxycarbonylalkyl, hydroxy(polyalkoxy)carbonylalkyl, mercaptoalkyl, mercaptoalkenyl, mercaptoalkoxycarbonylalkyl, mercaptoalkoxycarbonylalkenyl, alkoxycarbonyl(amido)alkyl, alkylcarbonyloxy(polyalkoxy)carbonylalkyl, tetrahydopyranyloxy(polyalkoxy)carbonylalkyl, tetrahydropyranyloxyalkyl, hydroxyaryl, mercaptoaryl or carboxyaryl group;
R², R³, R⁴, R⁵, R⁶, and R⁷are each independently a -H, -OH, -SH, acyl, C₁₋₅₂ alkyl, alkenyl, aryl, haloaryl, alkaryl, aralkyl, hydroxyalkyl, mercaptoalkyl, hydroxyaryl, alkoxyaryl, alkoxyhydroxyaryl, or mercaptoaryl group;
X is a C₆₋₃₂ aryl, haloaryl, alkaryl, aralkaryl, hydroxyaryl, dihydroxyaryl, cycloalkyl aryl, arylcycloalkyl, or a heteroatom, and
R⁶ and R⁷ may form a heterocyclic moiety in conjunction with X as nitrogen when a is 1 and m is 1,
one of R¹, R³, and R⁵ may join with R⁷and X to form a heterocyclic moiety with X as a heteroatom selected from the group consisting of oxygen and sulfur when a = 1 and m = 0; with the proviso that
when X is aralkaryl, z is 1 or 2, R⁶ and R⁷are -OH, a = 1, and m = 1, and with the further proviso that
when R⁶ is -OH or -SH, z = 1.

2. The stabilizer composition of Claim 1, wherein the zinc mercaptide provides 0.05 to 1.5 parts phr of zinc.

3. The stabilizer composition of Claim 1, wherein the zinc mercaptide is zinc bis(2-ethylhexyl thioglycolate), zinc bis(octyl mercaptopropionate), zinc bis(octadecyl thioglycolate), zinc bis(octadecyl mercaptopropionate), zinc bis(ethyl thioglycolate), inc bis(2-mercaptoethyl stearate), zinc (2-mercaptoethyl caproate), zinc bis(2-mercaptoethyl tallate), zinc bis(2-mercaptocaprylate), or a combination comprising at least one of the foregoing zinc mercaptides.

4. The stabilizer composition of Claim 1, comprising 0.05 to 4 phr of the latent mercaptan.

5. The stabilizer composition of Claim 1, wherein the latent mercaptan comprises a 2-S-(tetrahydropyranyl)thioglycolic acid ester of a C₄₋₁₆ alkyl alcohol or a 2-S-(dihydrofuranyl)thioglycolic acid ester of a C₄₋₁₆ alkyl alcohol.

6. The stabilizer composition of Claim 1, wherein the zinc mercaptide comprises zinc bis(2-ethylhexyl thioglycolate) and the latent mercaptan comprises the 2-S-(tetrahydropyranyl)thioglycolic acid ester of 2-ethylhexyl alcohol.

7. A stabilized polymeric composition comprising
a halogen-containing vinyl polymer and
a stabilizer composition, the stabilizer composition comprising a zinc mercaptide and a latent mercaptan and/or the degradation products thereof, wherein the zinc mercaptide is
a zinc mercaptoester of Formula 1:
Zn[S(CH₂)ₓC(=O)OR]₂ (1)
wherein each R is independently a hydrocarbyl group, and x is 1 or 2;
a zinc mercaptoester of Formula 2:
Zn[S(CHR')ₐ(CH₂)_{b}C(=O)OR"]₂ (2)
wherein a = 0 or 1, b = 1 or 2,
each R' is independently methyl or -C(=O)OR", and
each R" is independently -[(CH₂{C(R^{*})(R^{2*})}_{y}CH₂O)_{z}R^{3*}] where each R^{*} is independently -H, C₁₋₁₈ alkyl or C₁₋₁₈ hydroxy-substituted alkyl, each R^{2*} is -OH, C₁₋₁₈ hydroxy-substituted alkyl, or -OC(=O)R^{4*} , each R^{3*} is -H or C₁₋₁₈ alkyl, each R^{4*} is alkyl or alkenyl, y = 0 or 1, and z = 1-4, with the proviso that
when z is greater than 1, y=0;
a zinc mercaptoalkyl carboxylic acid ester of Formula 3:
Zn[SCH₂(CH₂)_{q}OC(=O)R^{5*}]₂, (3),
wherein q = 1-6, and
R^{5*} is a C₁₋₁₈ alkyl, C₁₋₁₈ alkenyl, or C₆₋₁₂ aryl group;
or a mixture comprising one or more of the foregoing zinc mercaptides; and wherein
the latent mercaptan is of formula (4): 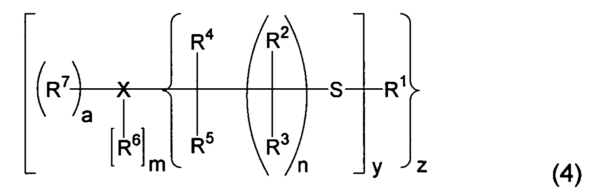 wherein a = 0 or 1, m = 0 or 1, n = 0 or 1, and y = 1-4, with the proviso that when y = 1, z = 1-4 and when y is greater than 1, z = 1;
R¹ is a C₁₋₅₂ alkyl, alkenyl, cycloalkyl, cycloalkenyl, aryl, alkaryl, aralkyl, alkenylaryl, aralkenyl, hydroxyalkyl, dihydroxyalkyl, hydroxy(polyalkoxy)alkyl, alkoxyalkyl, hydroxyalkoxyalkyl, alkoxy(hydroxyalkyl), alkoxy(acyloxyalkyl), alkoxy(polyalkoxy)alkyl, alkoxy(polyalkoxy)carbonylalkyl, carboxyalkyl, acyloxyalkyl, acyloxy(hydroxyalkyl), acyloxyalkoxyalkyl, acyloxy(polyalkoxy)alkyl, benzoyloxy(polyalkoxy)alkyl, alkylenebis-(acyloxyalkyl), alkoxycarbonylalkyl, alkoxycarbonylalkylenyl, hydroxyalkoxycarbonylalkyl, hydroxy(polyalkoxy)carbonylalkyl, mercaptoalkyl, mercaptoalkenyl, mercaptoalkoxycarbonylalkyl, mercaptoalkoxycarbonylalkenyl, alkoxycarbonyl(amido)alkyl, alkylcarbonyloxy(polyalkoxy)carbonylalkyl, tetrahydopyranyloxy(polyalkoxy)carbonylalkyl, tetrahydropyranyloxyalkyl, hydroxyaryl, mercaptoaryl or carboxyaryl group;
R², R³, R⁴, R⁵, R⁶, and R⁷are each independently a -H, -OH, -SH, acyl, C₁₋₅₂ alkyl, alkenyl, aryl, haloaryl, alkaryl, aralkyl, hydroxyalkyl, mercaptoalkyl, hydroxyaryl, alkoxyaryl, alkoxyhydroxyaryl, or mercaptoaryl group;
X is a C₆₋₃₂ aryl, haloaryl, alkaryl, aralkaryl, hydroxyaryl, dihydroxyaryl, cycloalkyl aryl, arylcycloalkyl, or a heteroatom, and
R⁶ and R⁷ may form a heterocyclic moiety in conjunction with X as nitrogen when a is 1 and m is 1,
one of R¹, R³, and R⁵ may join with R⁷ and X to form a heterocyclic moiety with X as a heteroatom selected from the group consisting of oxygen and sulfur when a = 1 and m = 0; with the proviso that
when X is aralkaryl, z is 1 or 2, R⁶ and R⁷are -OH, a = 1, and m = 1, and with the further proviso that
when R⁶ is -OH or -SH, z = 1.

8. A method of stabilizing a halogen-containing vinyl polymer comprising adding to the halogen-containing vinyl polymer the stabilizer composition of Claims 1-6.

9. An article comprising the composition and/or degradation products of the composition of Claims 1-6.

10. The article of Claim 9, wherein the article is a pipe, a window casing, siding, a bottle, wall covering or packaging film.
